# EUROPEAN PATENT APPLICATION

(11) **EP 3 066 927 A1**
(43) Date of publication of application: **14.09.2016**
(21) Application number: 16160179.4
(22) Date of filing: 14.03.2016
(51) Int. Cl.: A21B 3/13, A47J 36/20

(54) **BASKET FOR FOOD PREPARATION**

(30) Priority: 13.03.2015 SE 1550304
(71) Applicant: Foolproof AB, 741 71 Knivsta (SE)
(72) Inventor: Gerger, Patrik, 741 45 KNIVSTA (SE)
(74) Representative: Brann AB

(57) **Abstract**

The present invention relates to a basket for food preparation in an oven, wherein said basket comprises a bottom and at least one side connected to said bottom, wherein at least part of said basket comprising polyether ether ketone (PEEK) and said bottom further comprising at least one, preferably at least three, protrusions for allowing air circulation under the basket.

## Description

### TECHNICAL FIELD

The present invention relates to a basket for food preparation in an oven.

### BACKGROUND

The preparation and heating of fast food takes place in a number of different locations such as restaurants, gas stations, hotels and cafés. In order to meet the demands placed by the customers, the food must be of high quality and taste, and yet be prepared in a short space of time without access to a fully equipped kitchen.

Generally, specialized ovens are used, having hundreds or even thousands of heating programs for different food products, and the ovens provide temperatures in the range of 200-300°C as well as high levels of microwave radiation and vigorous circulation of streaming hot air combined with powerful microwave processors. A meal containing hamburgers, fried chicken, fried sandwiches, pizza or French fries can thereby be prepared within a short space of time, from seconds to a few minutes, and in order to compete with fast food restaurants, the quality of the food must be on the same level or above what's on offer there.

This places high demands on the utensils and accessories used in the ovens. Generally, the food items are placed in a basket and inserted into the oven, subjected to a heating program especially designed for the food item, and then removed by gripping or lifting the basket from the oven to a preparation site or desk. Then, the food items are removed from the basket and placed on a plate before being served to the customer. The basket must thus be able to withstand high temperatures and high levels of microwave radiation without being damaged or becoming too soft, and should be non-stick to prevent the food from sticking to the basket after preparation.

In order to allow safe and convenient handling of the food products, both before and after heating, the basket used should be stable to avoid spilling or tipping and should also cool quickly to facilitate handling in the preparation area.

Today, baskets are generally made from a non-stick material such as polytetrafluoroethylene (PTFE, known under the brand name Teflon, among others) that cools quickly but can only be used a limited number of times before needing replacement. The baskets are often in the form of mesh baskets or solid bottom baskets, but due to wear and tear as well as damages caused by the high temperatures and microwave radiation, there are problems regarding stability and reliability. Depending on the properties of the food products, it can also be difficult to achieve a high quality result and to avoid the risk of overheating, which in turn may present a fire hazard.

Conventional pans made from glass or ceramics are unsuited to this application, since they remain hot for a long time after use, and they are also heavy to lift and handle.

One known basket for food preparation is known from US 2013/0277374 (Lewis et al.).

Thus, there is clearly a need for an improved basket for food preparation that can overcome the drawbacks discussed above.

The object of the present invention is to eliminate or at least to minimize the problems discussed above. This is achieved through a basket for food preparation according to the independent claim 1. By using polyether ether ketone (commonly known as PEEK), the basket can be made more sturdy and reliable, and can also be used thousands of times without requiring replacement. PEEK is approved for use within the food industry and can withstand high temperatures and microwave radiation without deformation or damage, and cools off quickly upon removal from the oven. Furthermore, PEEK has a low density and is thus light and easy to handle, compared to pans made from ceramics or glass. Thanks to the sturdy construction, the basket can be removed by gripping with a gripping tool, thereby providing a more reliable handling than with conventional baskets and thus lowering the risk of dropping the basket or spilling hot food. The basket comprises a bottom and at least one side connected to said bottom, said bottom further comprising at least one, preferably at least three, protrusions for allowing air circulation under the basket.

It is advantageous that the basket is raised up on the protrusions from an oven surface so that hot air can circulate underneath, providing an even heating to avoid cold, burnt, dry or doughy areas of the food products. This creates a significant improvement in the quality of the cooked food compared to prior art baskets, thanks to the more uniform heating that can be achieved when the air circulates underneath the basket.

According to another aspect of the invention, said bottom further comprises a plurality of apertures, and/or said at least one side comprises a plurality of apertures. Thereby, the hot air can circulate and act more efficiently on the food products inside the basket, and the basket itself can be made more cost efficient thanks to material savings.

According to yet another aspect of the invention, the basket comprises a ridge extending along an upper end of the at least one side. Thereby, the basket can be gripped by a tool and lifted into and out of the oven, allowing for a more precise control over the basket and decreasing the risks of dropping the basket or spilling the food products contained therein.

According to a further aspect of the invention, the basket comprises a locking device for fixating an insert inside the basket. Thereby, an insert placed in the basket can be locked in place to prevent slippage and thus also decreasing the risk of the insert falling out.

According to another aspect of the invention, the basket further comprises an insert mounted inside the basket. Thereby, food can be securely held within the basket even if the apertures in the basket are large, and the insert can be replaced if desired without requiring replacement of modification of the basket itself.

According to yet another aspect of the invention, said insert comprises a sheet or mesh net made from glass fabric coated with a non-stick material, preferably polytetrafluoroethylene (PTFE). Thereby, a reliable and convenient insert can be achieved, being flexible to allow for an insertion and fixation in the basket and with a non-stick surface of a material approved for use in the food industry.

Further advantages and benefits of the invention will become readily apparent to the person skilled in the art in view of the detailed description below.

### DRAWINGS

The invention will now be described in more detail with reference to the appended drawings, wherein:
- Fig. 1: shows a perspective view from above of a basket for food preparation according to a preferred embodiment of the invention;
- Fig. 2: shows a perspective view from below of the basket of Fig. 1;
- Fig. 3: shows a side view of the basket of Fig. 1-2;
- Fig. 4: shows a perspective view from above of the basket of Fig. 1-3 with an insert in the form of a mesh net;
- Fig. 5: shows a perspective view of the basket of Fig. 1-4 with a gripping tool and an oven;
- Fig. 6: shows a perspective view of the components of Fig. 5 with the basket placed inside the oven;
- Fig. 7: shows the basket of Fig. 1-6 with an alternative gripping;
- Fig. 8a: shows the basket with additional protrusions and recessions to enable stacking of a plurality of baskets;
- Fig. 8b: shows three baskets forming a stack for cooking; and
- Fig. 8c: shows three baskets forming a stack for storage.

### DETAILED DESCRIPTION

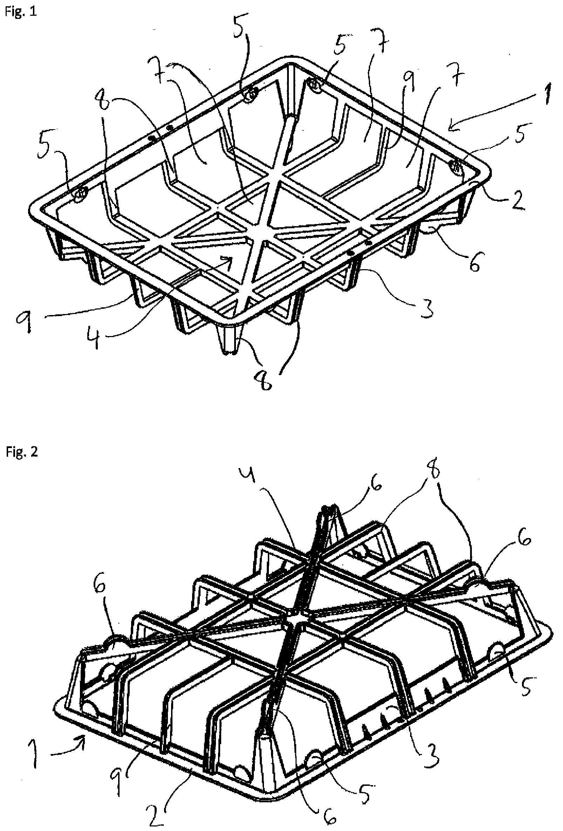

Fig. 1 discloses a basket 1 according to a preferred embodiment of the present invention, with a bottom 4 and at least one side 3. In this embodiment, the basket is essentially rectangular in shape and thus has four sides 3, but other shapes such as circular, oval, triangular or quadratic are of course also possible within the scope of the invention. Depending on the shape used for the basket, the number of sides also varies.

The sides 3 end in a ridge 2 that extends along a top of the basket 1, and the bottom 4 and sides 3 comprise a plurality of apertures 7 that allow hot air to act on a food product held in the basket 1. Another purpose of the apertures 7 is to minimize the amount of material required for manufacturing the basket 1. Therefore, the bottom and sides comprise a plurality of beams 8, 9, 10 that run across the bottom 4 in a pattern that renders high stability and torsional rigidity to the basket 1 while requiring only a minimum of material.

Thus, a first beam type 8 extends straight and diagonally across the bottom 4, and a second beam type 9 is added to provide support while minimizing the material required.

The basket 1 also comprises locking means 5, preferably a plurality of locking devices 5, arranged along the sides 3 to lock an insert 10 into place in the basket as will be described further below. Furthermore, at least one but preferably at least three protrusions 6 extend from the bottom 4 to allow the bottom 4 to rest at a distance from an oven surface on which the basket 1 is placed. These protrusions are in this preferred embodiment four in number, and are placed along the diagonally extending beams 8 so that each corner of the rectangular basket 1 is raised to allow hot air inside the oven to circulate underneath the basket 1. This is advantageous in allowing the food products that may be placed in the basket 1 to heat evenly and avoid burnt or cold areas, as well as allowing food such as French fries to be cooked with a crispy surface that is appealing to the customer. Thus, significant increases in food quality can be achieved thanks to the protrusions 6 and the raising of the basket 1 from the oven surface.

Fig. 2 shows the basket 1 turned upside down, so that the protrusions 6 are clearly visible. The first beam type 8 is in this embodiment U-shaped to provide additional support. The ridge 2 is in this embodiment L-shaped to provide support and strength and to be able to be gripped by a gripping tool, as will be described further below.

The basket 1 is made at least partly from polyether ether ketone, commonly known as PEEK. This material has high stability and can withstand high temperatures and high levels of microwave radiation without being damaged, and the disadvantages associated with the prior art baskets can therefore be avoided. In order to provide a cost efficient basket, the amount of material required should be kept to a minimum, while at the same time ascertaining that the basket is stable and reliable enough for the use intended. In this preferred embodiment, at least part of the basket 1 is made from PEEK, with the rest being made from another material. Several materials are suitable for use together with PEEK, and one option would be to use polytetrafluoroethylene (PTFE) or PTFE coated glass fiber. Another option would be ceramic fiber paper products, such as Fiberfrax^{®}, which is especially suitable since they are exceptionally temperature stable and have the advantages of low density and being easy to wrap, shape or cut. Alternatively, liquid crystal polymer (LCP), polyethersulfone (PES), or polyphenylene sulfide (PPS) and similar materials could be used.

It is, however, advantageous to make the basket 1 entirely from PEEK, giving the advantages associated with the material and enabling a use of the basket 1 for thousands of times without requiring replacement of parts.

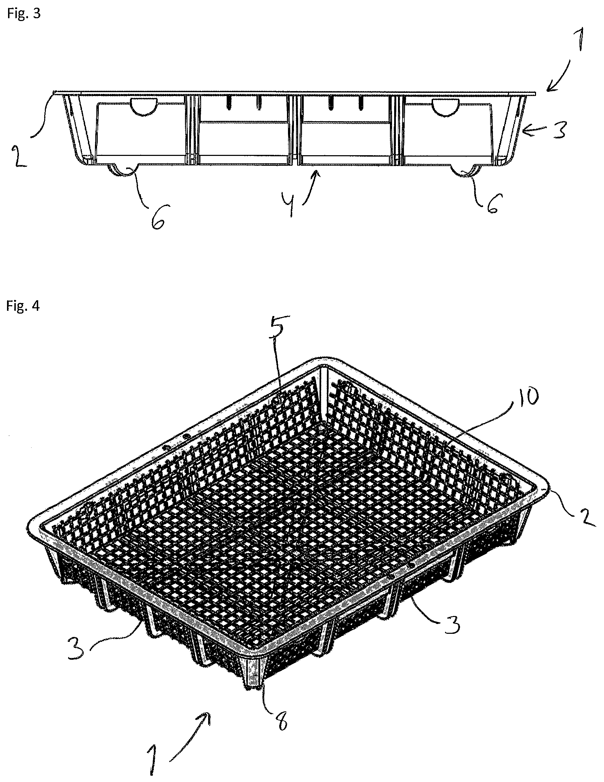

Fig. 3 shows the basket 1 from the side, disclosing more clearly the protrusions 6 and the locking means 5.

Fig. 4 shows the basket 1 with an insert 10 in the form of a mesh net placed in the basket 1 and secured by locking means 5 to be held securely against the sides 3 and bottom 4 of the basket 1. The locking devices 5 can be in the form of flaps by which the insert 10 can be held in place, but could alternatively also comprise other types of locking devices or locking means that provide automatic fixation of the insert 10 when it is inserted into the basket 1 and pressed against the sides 3. With the insert 10 in place, the basket 1 can hold food products of different sizes without risking them falling out through the apertures 7 in the bottom 4, and depending on the properties of the food product that is to be placed in the basket, inserts in the form of mesh nets with different sized apertures or even solid sheets can be selected for mounting in the basket 1. To avoid dripping from greasy food products, for instance, which could otherwise result in the dripping fat being ignited, a solid sheet can be used as insert to decrease the need for cleaning the oven after heating.

The insert 10 is preferably made from a flexible, durable material with a non-stick surface, such as glass fiber coated with polytetrafluoroethylene (PTFE), for instance. It is to be understood, however, that any non-stick material approved for use within the food industry would be suitable for coating the insert 10, and that any flexible, durable material that withstands high temperatures and microwave radiation can be used as a core of the insert 10. If the insert 10 is affected by the heat and radiation of the oven and begin to lose its shape or be damaged by repeated use, it can easily be removed from the basket 1 and be replaced by a new insert 10 of the same type or of another. Thereby, the advantages associated with the stability and reliability of the basket 1 can be maintained and the insert 10 be replaced as needed to continuously provide a basket for food preparation with the desired properties. The cost for maintaining the basket 1 and insert 10 are also kept low, thanks to the relatively low cost of replacing the insert 10 only compared to the replacing of the basket 1 also.

The use of the basket 1 in an oven will now be described in more detail with reference to Fig. 4-5 in particular.

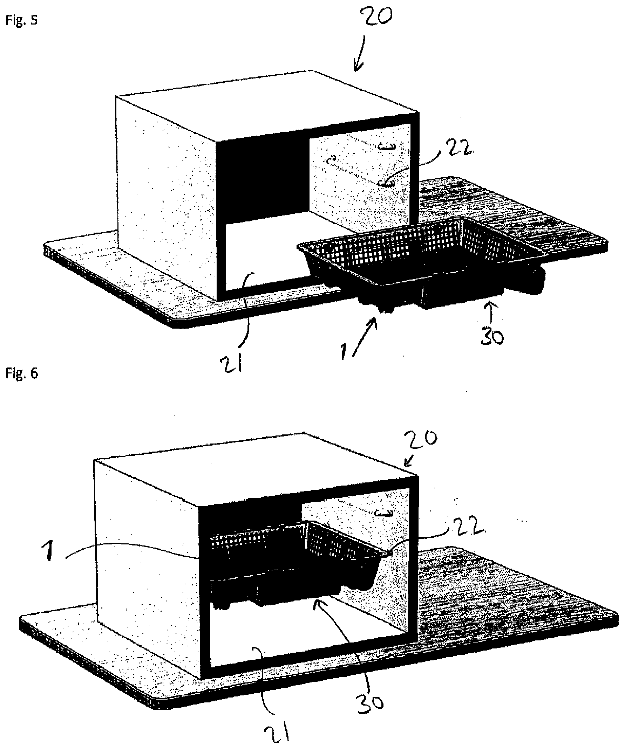

Fig. 5-6 shows an oven 20 and a basket 1 with insert 10 according to the preferred embodiment of the invention, with a gripping tool 30 gripping the bottom 4 and the ridge 2 to allow a user to grip the tool and lift the basket 1 in a reliable and convenient manner.

When a food product is to be heated, it is placed in the basket 1 and the basket 1 is lifted by the tool 30 and lifted into the oven 20, and either placed on an oven surface 21 or hung on rails 22 inside the oven 20. The tool 30 is removed to leave the basket 1 standing or hanging inside the oven 20, and a door (not shown) of the oven 20 is shut. A heating program corresponding to the food product is selected, and after the program has ended the door can be opened and the tool 30 used to once again grip the basket 1 and lift it from the oven 20. The basket 1 can now be placed on a preparation surface (not shown) and the food product removed to be placed on a plate or similar and served to the customer. The tool 30 can be used to grip the same basket 1 or another for the next food product to be heated.

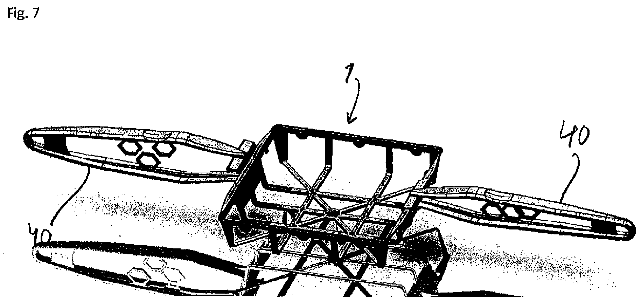

Fig. 7 shows the basket 1 together with a second gripping tool 40 in the form of a pincer tool, where a gripping and pressing of the handle results in a secure locking of the tool around the ridge 2 of the basket 1. A pincer tool is especially advantageous when food products of low weight are to be heated, such as a singular item of food or a small quantity of a lighter food such as French fries.

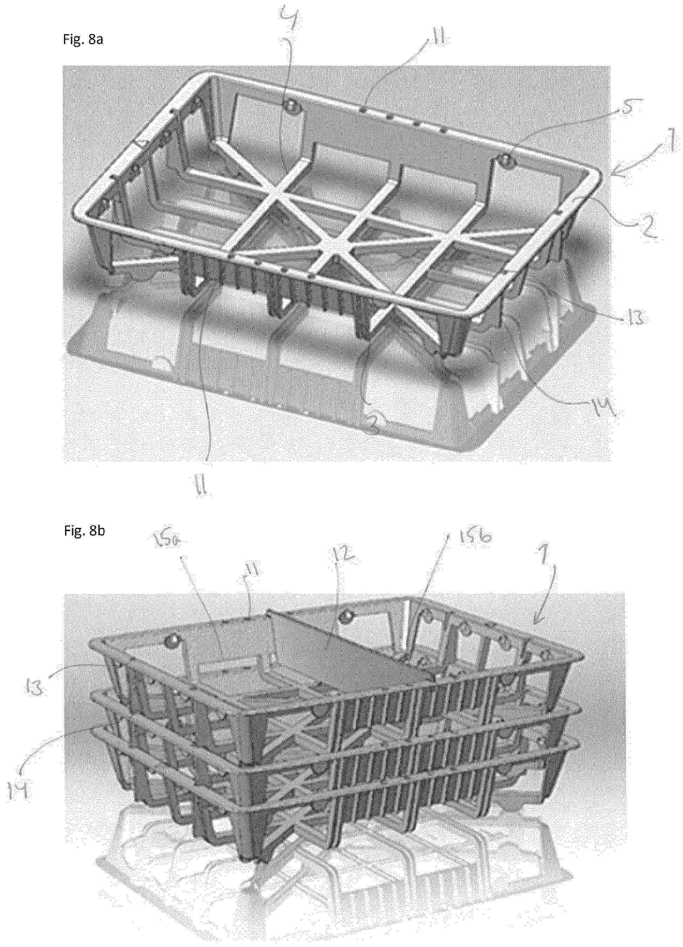

Fig. 8a shows the basket 1 having stacking protrusions 14 extending from the sides 3 and receiving portions 13 in the form of recesses in the ridge 2, the receiving portion being shaped to receive and cooperate with a stacking protrusion 14 of another basket according to the invention to form a basket stack, as is shown in Fig. 8b. This is achieved by the receiving portion 13 and stacking protrusions 14 being arranged on vertically opposing sides of the basket 1, i.e. one of them facing upwards and one facing downwards when the basket is held horizontally as in Fig. 8a-8c. A plurality of baskets 1 can thereby interact to form a stack and allow food preparation of a plurality of food items at the same time.

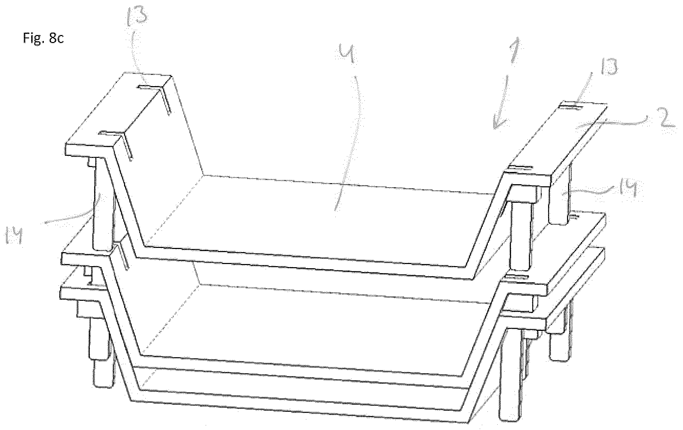

Preferably, the stacking protrusion 14 and the receiving portion 13 are arranged asymmetrically on the basket 1 with respect to a plane through the center of the basket along one of the principal axes, so that a stack of baskets 1 where all baskets have the same orientation results in a first type of stack and a stack of baskets 1 where every other basket is turned 180 degrees around an axis protruding through the bottom of the basket results in a second type of stack. One of the types of stack is a cooking stack, as shown in Fig. 8b, where the baskets each have space for food items so that the stack can be inserted as a whole into an oven and cook a plurality of meals simultaneously. The other type of stack is a storage stack, as shown in Fig. 8c, where the baskets can be stacked in a space efficient way to storage when they are not used.

As can be seen in Fig. 8c, the receiving portions 13 and the stacking protrusions 14 on the left hand side of the Figure differ from the corresponding features on the right hand side, creating the asymmetric placement that allows for the stacking as a storage stack or as a cooking stack.

Fig. 8a-8b also show a partition 12 arranged to divide the basket 1 into compartments 15a, 15b to improve the cooking of different food items simultaneously (for instance a hamburger in one compartment and French fries in the other). The partition 12 is mounted on the side 3 by insertion into partition holes 11 in the ridge 2 that serve to hold the partition 12 securely while also allowing for an easy removal. In one embodiment, the insert 10 can be placed in the basket 1 before the partition 12 is inserted, but in another embodiment each compartment 15a, 15b may have its own insert that are mounted after the partition 12. Thanks to a plurality of partition holes 11 distributed along the ridge 2, the size of the compartments 15a, 15b may be varied.

Preferably, the basket 1 is used together with a cooking tray on which is can stand during cooking in the oven and that may serve to collect dripping fat and the like that would otherwise end up on an oven floor and create a fire hazard.

The basket 1 can be of any size and proportions that renders it large enough to hold the food products and stable enough to be able to provide secure and reliable handling of the basket and its contents. In one embodiment, the basket 1 is of a rectangular shape with a length of 307 mm and a width of 235 mm, having beams 8 that are about 8 mm thick and 6 mm high. The height of the basket 1 is 46 mm and the protrusions 6 5 mm, with locking flaps 5 that extend 8 mm from the wall 3 of the basket 1. For this size and shape, a gripping tool such as the pincer tool described with reference to Fig. 7 is 30-40 mm thick and 180 mm long from its tip to an end of the handle, to protect the user from the risk of burns.

The invention is not to be seen as limited by the embodiments described above, but can be varied within the scope of the appended claims, as will become readily apparent to the person skilled in the art. For instance, the basket 1 can be of a wave-like shape with several wave troughs for holding elongated bread products such as baguettes. The basket could also be solid and made entirely of PEEK, an embodiment that would be suitable for heating food products such as soup or pasta.

## Claims

1. Basket for food preparation in an oven, wherein said basket (1) comprises a bottom (4) and at least one side (3) connected to said bottom (4), **characterized in** at least part of said basket (1) comprising polyether ether ketone (PEEK) and said bottom (4) further comprising at least one, preferably at least three, protrusions (6) for allowing air circulation under the basket (1).

2. Basket according to claim 1, wherein said bottom (4) further comprises a plurality of apertures (7).

3. Basket according to any of claims 1-2, wherein said at least one side (3) comprises a plurality of apertures (7).

4. Basket according to any of the claims 1-3, wherein the basket (1) comprises a ridge (2) extending along an upper end of the at least one side (3).

5. Basket according to any previous claim, further comprising a locking device (5) for fixating an insert (10) to the basket (1).

6. Basket according to any previous claim, further comprising an insert (10) mounted inside the basket (1).

7. Basket according to claim 6, wherein said insert (10) comprises a sheet or mesh net made from glass fiber coated with a non-stick material, preferably polytetrafluoroethylene (PTFE).

8. Basket according to any previous claim, wherein the entire basket (1) is made from polyether ether ketone (PEEK).

9. Basket according to any previous claim, wherein the basket (1) comprises at least one partition (12) arranged to divide the basket (1) into at least two compartments, said partition (12) being mounted on at least one side (3).

10. Basket according to claim 9, wherein the basket comprises an insert (10) and said partition (12) is mounted above said insert (10).

11. Basket according to claim 9, wherein each of said compartments comprises an insert (10).

12. Basket according to any previous claims, comprising at least one stacking protrusion (14) and at least one receiving portion (13), the receiving portion (13) being shaped to receive and cooperate with a stacking protrusion (14) but arranged on a vertically opposing side of the basket (1) for allowing an interaction with a second basket of similar shape.

13. Basket according to claim 12, wherein the at least one stacking protrusion (14) and the at least one receiving portion (13) are arranged asymmetrically on the basket (1).
